# EUROPEAN PATENT SPECIFICATION

(11) **EP 4 533 333 B1**
(45) Date of publication and mention of the grant of the patent: **26.11.2025**
(21) Application number: 23768988.0
(22) Date of filing: 18.08.2023
(51) Int. Cl.: G06N 3/063, G06F 1/3234, G06F 1/3225

(54) **REDUCING POWER USAGE OF MODELS**
VERRINGERUNG DES STROMVERBRAUCHS VON MODELLEN
RÉDUCTION DE LA CONSOMMATION D'ÉNERGIE DE MODÈLES

(43) Date of publication of application: 09.04.2025
(73) Proprietor: GOOGLE LLC, Mountain View CA 94043 (US)
(72) Inventor: PRASAD, Janardan, Mountain View, California 94043 (US); PERUGUPALLI, Alekhya, Mountain View, California 94043 (US)
(74) Representative: Marks & Clerk GST
(86) International application number: PCT/US2023/030570
(87) International publication number: WO 2025/042381

(56) References cited:
- US-A1- 2017 206 031
- US-A1- 2020 293 105
- US-A1- 2022 291 739

## Description

### BACKGROUND

This specification relates to computer memory.

Mobile computing devices, e.g., ambient computing devices, smart phones, personal digital assistants, electronic tablets, laptops, and the like, typically use power provided by one or more rechargeable batteries. A rechargeable battery provides only a finite amount of power to a device before the battery must be recharged, e.g., by applying an electric current to the battery. Recharging the battery of a mobile computing device generally requires connecting the mobile computing device to an electric grid, which reduces or eliminates its mobility. Consequently, reducing power consumption of mobile computing devices, thereby extending their battery life, is an important objective. Reducing power consumption is especially important for ambient computing devices, such as wearable devices, where remaining powered-on by a battery is necessary for use by a user.

Mobile computing devices can include components such as sensors, processors, and memory, that consume power. Volatile memory is a type of computer memory that retains its data when powered, but loses its data after losing power. Two example types of volatile memory are dynamic random access memory (DRAM) and static random access memory (SRAM). DRAM requires periodic refreshes and power to maintain its data while SRAM requires constant power to maintain its data.

Mobile computing devices can store models such as machine learning models in memory such as SRAM. However, conventional techniques for storing models in SRAM require keeping SRAM active. Keeping SRAM active consumes significant power, which is limited in mobile computing devices such as wearable devices. Conventional techniques for reducing power usage of SRAM can result in delays in running the model, which may delay other operations of the device. These delays can lead to larger amounts of power consumption and adverse impacts to the function of the device or the experience of a user of the device. For example, storing the model in secondary storage can reduce the amount of power consumed, but would require longer periods of time to load the model from secondary storage. In addition, power gating can reduce the amount of power consumed, but because power gated SRAM does not maintain its data, would also lead to delays from loading the model from secondary storage. US 2020/293105 A1 describes a computer system comprising a scheduled computation module, a work memory storage device, and a controller. The scheduled computation module is configured to receive and process data values according to a predetermined access pattern. The work memory storage device includes one or more work memory banks. The controller is configured to, based on scheduling information associated with the predetermined access pattern, (1) provide data values held by the one or more work memory banks to the scheduled computation module, and (2) selectively control a power state of the one or more work memory banks. US 2022/291739 Al describes a method for dynamically putting memory banks into a sleep mode of operation to conserve power. The method tracks the accesses to individual memory banks and, if a certain number of clock cycles elapse with no access to a particular memory bank, sends a signal to the memory bank indicating that it should operate in a sleep mode.

### SUMMARY

This specification describes a system that can reduce the power usage of storing a model in memory while minimizing the delay in running the model. The system stores a first portion of a model in an active segment of memory and a second portion of the model in a low-power segment of the memory, wherein a size of the first portion depends on an execution rate of a machine learning processor and a latency of transitioning the corresponding low-power segment of the memory to being an active segment of memory.

The system maintains a mapping between a model identifier of the model and a starting address of the second portion of the model in the low-power segment of the memory. Upon receiving a request to execute the model, the system initiates execution of the model using the first portion of the model. The system transitions the low-power segment of the memory to another active segment of memory. Thus when the system finishes executing the first portion of the model in the active segment of memory, the second portion of the model is already stored in an active segment of memory.

Particular embodiments of the subject matter described in this specification can be implemented so as to realize one or more of the following advantages.

The system can retain the timing benefits of storing a model in memory while reducing the amount of power needed to store the model in memory. For example, the system can store a first portion of the model in an active segment of memory, and a second portion of the model in a low-power segment of memory. The low-power segment of memory can retain data at lower voltage than storing the data in an active segment of memory. Thus, the system can reduce the power needed to store the model. Furthermore, the system can maintain a mapping between a model identifier of the model and a starting address of the portion of the model in the low-power segment of memory. Upon initiating execution of the first portion of the model, the system can transition the low-power segment of memory into an active segment of memory. While the low-power segment of memory is transitioning into an active segment of memory, the system can begin executing the model in the active segment of memory, thus hiding the latency of transitioning the low-power segment of memory. Upon finishing execution of the first portion of the model, the system can jump to the starting address of the second portion of the model and continue the execution of the model. Thus, the system can execute the model as if the entire model were stored in active memory.

The system can save computing resources. By reducing the amount of power needed to store a model in memory, the system can store and run a larger number of models, larger and more sophisticated models, or both. In addition, a system running on a device can run for a longer period of time before needing to be recharged. Accordingly, the system can provide greater functionality with limited impact on the battery life of the device. The system can thus increase the total battery life of the device that stores and runs the model, compared to a device that stores the model in secondary storage, for example.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram of an example system for reducing the power usage of storing a model in memory.
FIG. 2 is a diagram of an example layout of a model in memory on an ambient computing device.
FIGS. 3A-3B are flowcharts of example processes for reducing the power usage of storing a model in memory.

Like reference numbers and designations in the various drawings indicate like elements.

### DETAILED DESCRIPTION

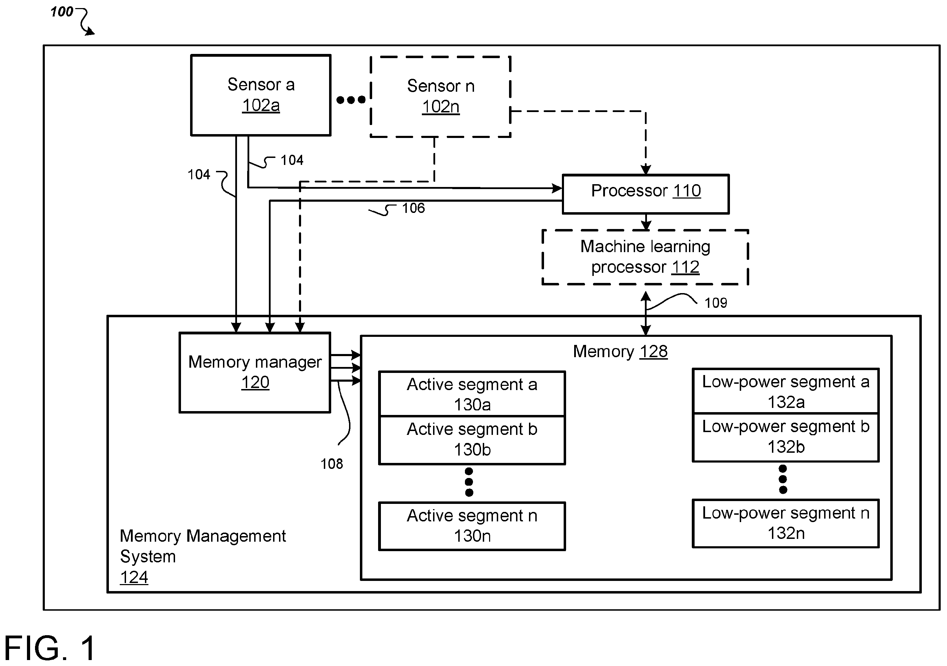

FIG. 1 is a block diagram of an example system 100 for reducing the power usage of storing a model in memory. The system 100 includes various components, such as sensors 102a - 102n (collectively, "sensors 102"), a processor 110, and a memory management system 124. The system 100 can be located on an ambient or wearable device, for example. Some examples of ambient or wearable devices include a smart phone, a smart watch, a fitness tracker, a personal digital assistant, an electronic tablet, or a laptop. The various components can be implemented on a system on a chip (SoC) within the device.

A sensor of sensors 102 can be any type of hardware device, such as an image sensor, a light sensor, a movement sensor, or a button, that is configured to receive data representing conditions external to the system 100. The sensors 102 can also be configured to send interrupts 104 to other components in the system 100, such as memory management system 124 and processor 110.

An interrupt 104 can include data representing external conditions, or data indicating that a particular event has occurred. For example, the interrupt 104 can include data indicating that a user has selected a particular machine learning model to execute. For example, the user can select a corresponding function of the machine learning model through a user interface. An interrupt 104 can also include a request to execute a certain machine learning model to process the data collected by the sensor 102. In some implementations, each sensor 102 can generate a unique interrupt 104 that corresponds to a particular machine learning model.

The processor 110 can be any appropriate type of processing unit that is configured to receive interrupts 104 and process the interrupts 104. For example, the processor 110 can process an interrupt 104 by accessing the model in memory 128 that is specified in the interrupt 104. For example, the processor 110 can access memory 128 using memory access signals 109. The memory access signals 109 can include requests to access memory 128 as well as the contents of memory 128. The processor 110 can also execute the model, for example, by stepping through the instructions of the model and applying the data collected from sensors 102.

The memory 128 is a memory subsystem that can be implemented using one or more underlying memory devices controlled by the memory manager 120. For brevity, the use of the term "memory" in this specification can mean a memory subsystem having multiple underlying memory devices.

A model such as a machine learning model can be trained to receive an input that represents some observed phenomena and map the input to an output in a manner that recreates a relationship between the observed phenomena. The model can be defined by computational instructions, and trained parameters and weights, for example. Thus, executing a model can include, for example, loading the computational instructions and associated parameters for the model that are stored in memory 128 into the processor 110. The processor 110 can then execute the instructions by applying the data collected from sensors 102 to generate an output.

In some implementations, the processor 110 can generate processor interrupts 106. For example, the processor 110 can execute a first model, and an output of the first model may trigger the processor 110 to execute a second model. The processor 110 can thus send a processor interrupt 106 indicating the second model to the memory manager 120. For example, the first model can be a simpler or more basic machine learning model with fewer parameters or lower accuracy than the second model. For example, the first model can be a basic heart rate monitor and the second model can be a more advanced heart rate monitor. If the first model makes a prediction with a certain result, such as a predicted irregularity in a user's heartbeat, the processor 110 can send a processor interrupt 106 indicating the more advanced heart rate monitor to the memory manager 120.

In some implementations, the system 100 can include a machine learning processor (112). For example, the machine learning processor 112 can be a tensor processing unit (TPU). A machine learning processor 112 or TPU is a processing unit such as processor 110 that is specialized for executing machine learning models. In some implementations, the TPU can be a TPU specialized for executing machine learning models on low power devices.

The memory management system 124 is configured to store one or more models in memory. The memory management system 124 can include a memory manager 120 and memory 128. The memory 128 can include one or more segments of memory, such as active segment a - n 130a - 130n (collectively, "active segments 130") and low-power segment a - n 132a - 132n (collectively, "low-power segments 132").

The memory manager 120 is a hardware module that can be implemented by data processing apparatus, e.g., digital logic circuitry, a microprocessor, or some combination of one or more of them.

Memory 128 can be partitioned into any number of segments of memory. Each segment of memory, such as active segment a 130a and low-power segment a 132a, is a smaller partition of memory 128. Each segment of memory can store different portions of a model or different portions of different models that are in the same power state. For example, active segment a 130a can store a first portion of a model, and low-power segment a 132a can store a second portion of the model. Each segment of memory can have a different size, e.g., store a different number of instructions or data.

Each segment of memory can be in one of multiple states, for example, active or low-power. An active state for a segment of memory is a state in which the data stored in the segment of memory can be accessed by the processor 110. In the example system 100, the active segments 130 remain in the active state while the system 100 is powered on. That is, the active segments 130 are in the active state while the device on which the system 100 is located has battery power.

Low-power segments 132 can be in a low-power state, such as a light sleep mode or a deep sleep mode. For example, a low-power state can be a state with a lower retention voltage, or where the voltage required is at a lower level that still allows the segment of memory to retain content. A segment of memory in a low-power state uses less power than a segment of memory in the active state while retaining the data stored in the segment of memory, but the data cannot be accessed. To access the data in a segment of memory in a low-power state, the system 100 can transition the segment of memory to an active state. Each transition can have a latency. For example, transitioning a segment of memory from deep sleep mode to the active state can have a latency of 50 clock cycles.

The segments of memory can be transitioned to different power states, e.g., active state to low-power state, or low-power state to active state. For example, the memory manager 120 can transition a segment of memory from a low-power state to an active state to allow the processor 110 to access the data of the segment of memory. The memory manager 120 can transition a segment of memory from an active state to a low-power state to reduce the power consumption of the memory management system 124 when the segment of memory is not being accessed. The memory manager 120 can transition a segment of memory between the active state and a low-power state by sending signals 108 to the segment of memory. For example, the signals 108 can include power state instructions. The power state instructions can include an input signal to the segment of memory that enables the transition. The particular instructions can vary based on the type of memory 128 used. The power states of segments of memory can be transitioned independently of the power states of other segments of memory.

In some implementations, segments of memory can include one or more physical instances of memory. For example, memory 128 can be partitioned into any number of banks, rows, and rows of a bank in any number of ways. As an example, if memory 128 has 8 megabytes (MB) of capacity, memory 128 can be partitioned into 8 individual banks of equal size, e.g., 1 MB per bank. Each memory bank may be a vertical partition of memory 128 that can include a single physical instance or multiple physical instances of memory. For example, a 1 MB memory bank may contain one physical instance of 1 MB. As another example, a 1 MB memory bank may be partitioned into 8 physical instances of memory such that each physical instance of memory includes 128 kB of memory.

For example, a segment of memory can be a group of physical instances of memory, such as one or more rows of memory cells, one or more columns of memory cells, or one or more memory banks. In the example above, each segment of memory can include one or more 128 kB physical instances of memory that are located across one or more banks.

Each segment of memory can include a different number of physical instances of memory that are in the same power state. For example, for a first model stored by active segment a 130a, the low-power segment a 132a can have a size of 256 kB. For a second model corresponding to active segment b 130b, the low-power segment b 132b can have a size of 748 kB. Thus if a 1 MB bank contains 8 physical instances of 128 kB each, low-power segment a 132a can include two physical instances, and low-power segment b 132b can include six physical instances.

The memory manager 120 is configured to store information about the layout of models stored in memory 128. For example, the memory manager 120 can store information such as a model identifier that identifies each model and a start address for the portion of each model stored in a low-power segment. In some implementations, the memory manager 120 can store the information in a layout table.

In some implementations, the system maintains information representing the bank number and instance number of where the models are stored. For example, the information about the layout of models can be stored in a layout table such as Table 1 below.

**Table 1. Example layout table stored by memory manager 120**

| Model identifier | Start address | Bank number | Instance number |
|---|---|---|---|
| 1 | <start address of second portion of model 1> | 1 | 1, 2 |
| 2 | <start address of second portion of model 2> | 1 | 3, 4, 5, 6, 7, 8 |

As an example, a first model can have a model identifier of 1. The system 100 can store a first portion of model 1 in active segment a 130a and a second portion of model 1 in low-power segment a 132a. Low-power segment a 132a may be stored, for example, in bank number 1 and require two physical instances of memory, instance numbers 1 and 2. The memory manager 120 can thus store the start address of the second portion of model 1, and the bank number and instance numbers corresponding to model 1.

In this example, a second model can have a model identifier of 2. The system 100 can store a first portion of model 2 in active segment b 130b and a second portion of model 2 in low-power segment b 132b. Low-power segment b 132b may be stored, for example, in bank number 1 and require six physical instances of memory, instance numbers 3, 4, 5, 6, 7, and 8. The memory manager 120 can thus store the start address of the second portion of model 2, and the bank number and instance numbers corresponding to model 2.

The memory manager 120 can also be configured to store information about power states of the segments of memory in memory 128. For example, the memory manager 120 can store data representing a current power state, such as active or low-power, for each segment of memory. The memory manager 120 can update the current power states by sending a signal 108 to a segment of memory in memory 128. For example, the memory manager 120 can update the current power states periodically. The memory manager 120 can also update the power state of a segment of memory after transitioning the segment of memory from one state to another state. In some implementations, the memory manager 120 can store a segment identifier for each segment of memory and their corresponding current power state in a status table. In some implementations, the memory manager 120 can store information about power states of each physical instance.

In some implementations, the memory manager 120 can store information about power states in a power state table. For example, the memory manager 120 can store a power state mapping between each segment of memory and the power state of each segment of memory in a power state table such as Table 2 below. In some implementations, the power state table can include power state information for each physical instance in each segment of memory. The power state table can be updated periodically. For example, the memory manager 120 can send signals 108 to each segment of memory at intervals of time that include a query for the current power state of the segment of memory. For example, the memory manager 120 can query each segment of memory at a regular interval of time. The memory manager 120 can receive signals from each segment of memory that indicate the current power state for each segment of memory and update the power state table.

**Table 2. Example power state table stored by memory manager 120**

| Segment of memory | Power state |
|---|---|
| Low-power segment a | Low-power |
| Low-power segment b | Active |
| Active segment a | Active |
| Active segment b | Active |

The memory manager 120 is configured to receive an interrupt 104 or processor interrupt 106 that indicates one of the models stored in memory 128 should be run. For example, the interrupt 104 can include a model identifier that the memory manager 120 can use to index into a layout table such as Table 1.

As an example, the model specified by the interrupt 104 can be model 2, and a first portion of model 2 can be stored in active segment b 130b, and a second portion of model 2 can be stored in low-power segment b 132b. The system 100 can initiate execution of model 2 using the first portion of the model 2 stored in active segment b 130b. For example, the system 100 can load the first portion of model 2 from active segment b 130b into the processor 110 or machine learning processor 112. The processor 110 or machine learning processor 112 can thus begin executing the first portion of model 2.

While the first portion of model 2 is executing, the memory manager 120 can index into a layout table and determine the starting address of the second portion of model 2. In some implementations, the memory manager 120 can index into Table 1 and also determine the bank number and instance numbers corresponding to model 2.

The memory manager 120 can use a segment identifier for each low-power segment to index into a power state table to determine the current power states of the low-power segments. For example, if low-power segment b 132b is already in the active state, the memory manager 120 does not need to transition the low-power segment b 132b into the active state. Thus upon reaching an end of the first portion of model 2, for example, executing the last instruction of model 2 in active segment b 130b, the processor 110 can jump to the starting address of the second portion of model 2. For example, the last instruction in active segment b 130b can be a pointer to the starting address of low-power segment b 132b that is already in the active state.

If low-power segment b 132b is in a low-power state, the memory manager 120 can send signals 108 that include power state instructions to low-power segment b 132b that enable the transition to the active state. In some implementations, the memory manager 120 can use the physical instance numbers to index into a power state table to determine the current power states of the physical instances in low-power segment b 132b, and determine whether to transition each physical instance to the active state.

If the low-power segment b 132b is in a low-power state, the memory manager 120 can transition the low-power segment b 132b into being an active segment of memory. For example, the memory manager 120 can send signals 108 that include power state instructions to the low-power segment b 132b. In some implementations, the memory manager 120 can transition the physical instances into the active state, for example, by sending signals 108 that include power state instructions to physical instances 3, 4, 5, 6, 7, and 8.

Upon reaching an end of the first portion of model 2, for example, executing the last instruction of model 2 in active segment b 130b, the memory manager 120 can ensure that the low-power segment b 132b is in an active state. For example, the memory manager 120 can determine that the low-power segment b 132b has finished transitioning to being another active segment of memory. For example, the memory manager 120 can send signals 108 that include a query to the low-power segment b 132b for the current power state. The memory manager 120 can receive signals from the low-power segment b 132b that indicate that the current power state of the low-power segment b 132b is an active state.

In response to determining that the low-power segment b 132b has finished transitioning to being another active segment of memory, the processor 110 can jump to the starting address of the second portion of model 2. For example, the last instruction in active segment b 130b can be a pointer to the starting address of low-power segment b 132b.

The processor 110 can thus begin executing the second portion of model 2. For example, after transitioning the low-power segment b 132b to being an active segment, the system 100 can load the second portion of model 2 from low-power segment b 132b into the processor 110 or machine learning processor 112.

In some examples, the memory manager 120 may determine that the low-power segment b 132b has not finished transitioning to being another active segment of memory. That is, the low-power segment b 132b may not have transitioned to being an active segment by the time the processor 110 has finished executing active segment b 130b. For example, the low-power segment b 132b may have taken longer than expected to transition, or the system 100 did not store enough instructions in active segment b 130b to account for the latency of transitioning low-power segment b 132b. In these examples, the memory manager 120 can be configured to stall or pause the execution of model 2 by processor 110 until the low-power segment b 132b has finished transitioning to being an active segment.

For example, the memory manager 120 can send signals 108 that include a query to the low-power segment b 132b for the current power state. The memory manager 120 can receive signals from the low-power segment b 132b that indicate that the current power state of the low-power segment b 132b is a low-power state.

The memory manager 120 can stall the execution of model 2 until receiving a signal from the low-power segment b 132b that the low-power segment b 132b is in an active state. In some implementations, the memory manager 120 can send signals 108 that include a query to the low-power segment b 132b after an interval of time. For example, after the interval of time, the memory manager 120 can send more signals 108 that include a query to the low-power segment b 132b for the current power state. The memory manager 120 can receive signals from the low-power segment b 132b that indicate that the current power state of the low-power segment b 132b is an active state. The interval of time can be predefined, for example. In some examples, the memory manager 120 can receive signals from the low-power segment b 132b that indicate that the current power state is a low-power state. The memory manager 120 can continue to send signals 108 that include a query to the low-power segment b 132b at intervals of time until the memory manager 120 receives signals from the low-power segment b 132b that indicate that the current power state is an active state.

Thus, the memory manager 120 can determine that the low-power segment b 132b has transitioned to being another active segment of memory. In response, the processor 110 can jump to the starting address of the second portion of model 2. For example, the last instruction in active segment b 130b can be a pointer to the starting address of low-power segment b 132b.

The processor 110 can thus begin executing the second portion of model 2. For example, after transitioning the low-power segment b 132b to being an active segment, the system 100 can load the second portion of model 2 from low-power segment b 132b into the processor 110 or machine learning processor 112.

Upon reaching an end of the second portion of model 2, the system 100 has completed the execution of model 2. The memory manager 120 can transition the low-power segment b 132b to a low-power state to reduce power usage. For example, the memory manager 120 can send signals 108 that include power state instructions that enable the transition to the low-power segment b 132b. In some implementations, the memory manager 120 can transition the physical instances in low-power segment b 132b to a low-power state.

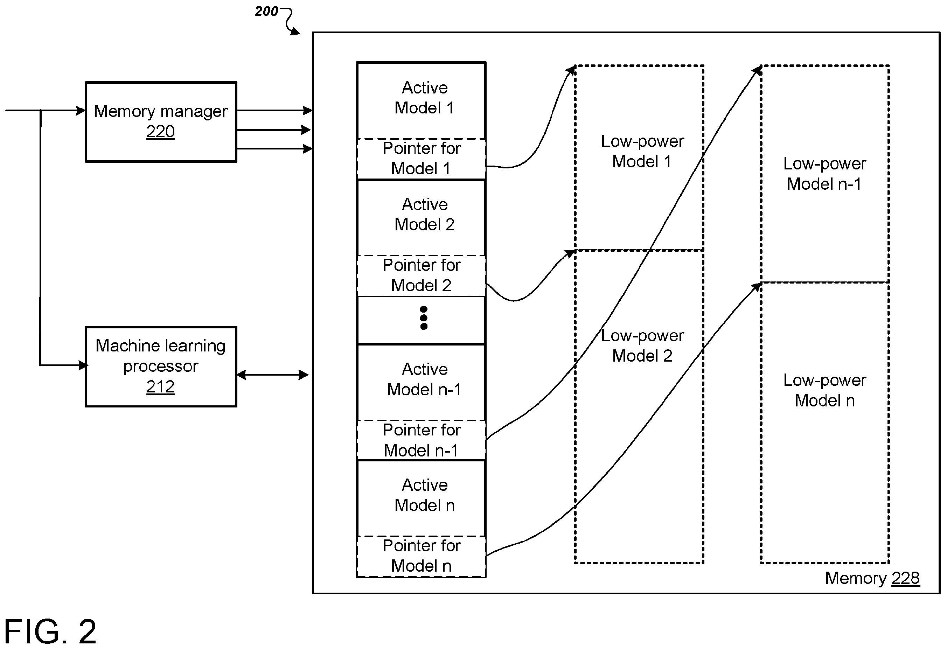

FIG. 2 is a diagram of an example layout 200 of models in memory 228 on an ambient computing device. Memory 228 can include one or more segments of memory, similar to memory 128 of FIG. 1. FIG. 2 also shows memory manager 220, which is similar to memory manager 120 of FIG. 1, and machine learning processor 212, which is similar to machine learning processor 112 of FIG. 1. In some implementations, the machine learning processor 212 can be a processor such as processor 110 of FIG. 1, or a processor specialized for executing machine learning models on low power devices.

Memory 228 can include one or more models, such as model 1, model 2, model n-1, and model n. For example, memory 228 can include instructions and/or data for each model. For example, for a machine learning model, memory 228 can include model parameters and weights that define the machine learning model.

Each model can be a machine learning model that has been trained to generate an output given an input. In particular, the machine learning model can have a time-sensitive application, such as a health-related machine learning model. For example, a health-related machine learning model can receive an input such as electrical signals that represent a user's heartbeat. The health-related machine learning model can generate an output that represents a user's predicted heart rate, for example, based on the input.

The instructions and/or data for each model can be stored in one or more segments. For example, as described in FIG. 1, a first portion of a model (active model 1, active model 2, active model n-1, and active model n) can be stored in an active segment, and a second portion of a model (low-power model 1, low-power model 2, low-power model n-1, and low-power model n) can be stored in a low-power segment.

The segments that store active model 1, active model 2, active model n-1, and active model n are in an active state while the device is powered on. The segments that store low-power model 1, low-power model 2, low-power model n-1, and low-power model n are typically in a low-power state if the models are not being executed by the machine learning processor 212.

The sizes of each active segment and low-power segment can vary. For example, low-power model 1 can include fewer parameters or weights than low-power model 2, and the segment that stores low-power model 1 can have a smaller size than the segment that stores low-power model 2.

The size of each active segment depends on an execution rate of a machine learning processor and a latency of transitioning the corresponding low-power segment of the memory to being an active segment of memory. The latency can depend on the type of memory 128, for example, the particular type of SRAM. For example, the size of the segment that stores active model 1 can depend on the execution rate of the machine learning processor 212 and the latency of transitioning the segment that stores low-power model 1 into an active state. For instance, the execution rate of machine learning processor 212 can be 1 byte per clock cycle. The latency of transitioning the segment corresponding to low-power model 1 from a low-power state to an active state can be 50 clock cycles. Thus, if active model 1 is 50 bytes, by the time the machine learning processor 212 finishes executing the active model 1, then the segment corresponding to low-power model 1 should be in an active state. Thus the segment that stores active model 1 can include the first 50 bytes of model 1 and a pointer for model 1. The pointer for model 1 can be a pointer to the starting address of low-power model 1. That is, the pointer for model 1 can be a pointer to the portion of model 1 that is not stored in an active segment of memory.

In some implementations, the first portion and second portion can correspond to layers of a machine learning model such as a neural network. For example, the weights for a first layer of the machine learning model can be stored in the first portion. The weights for subsequent layers of the machine learning model can be stored in the second portion.

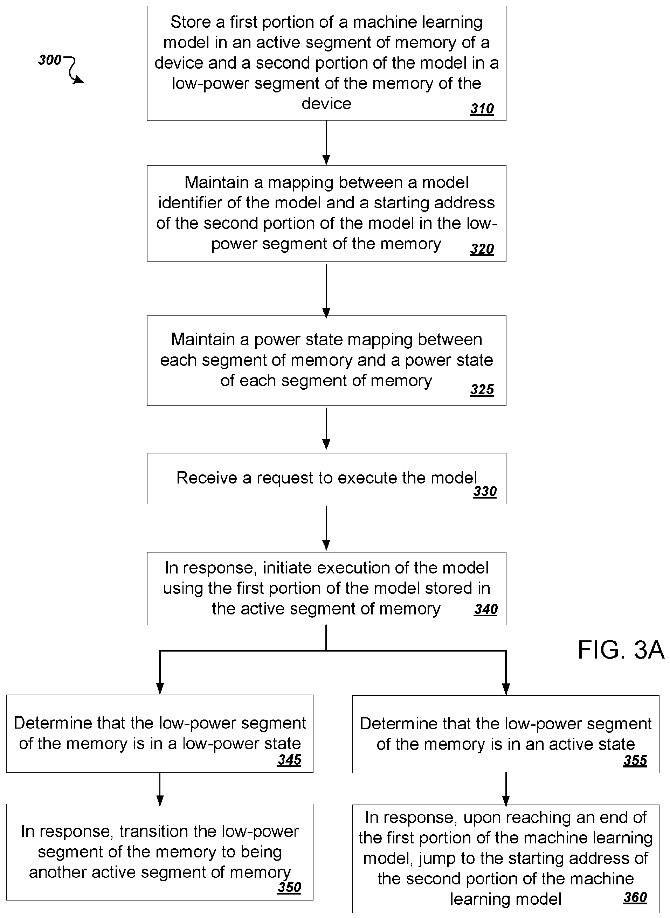

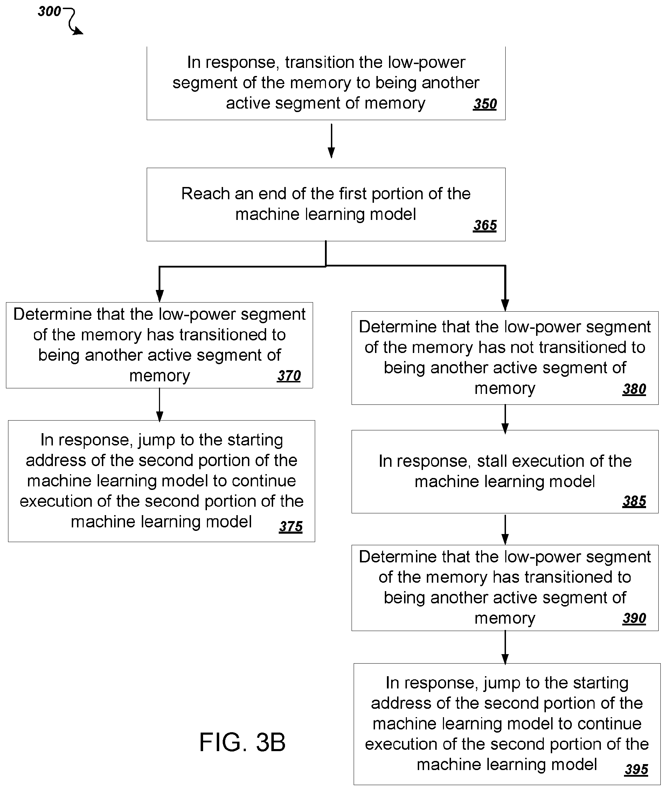

The layout 200 also shows that the segment that stores active model 1 includes a pointer to the starting address of low-power model 1. The layout 200 also shows that the segment that stores active model 2 includes a pointer to the starting address of low-power model 2. The segment that stores active model n-1 includes a pointer to the starting address of low-power model n-1, and the segment that stores active model n includes a pointer to the starting address of low-power model n. As described with reference to FIGS. 1 and 3, when the machine learning processor 212 and memory manager 220 receive an interrupt that specifies model 1 to be run, for example, the machine learning processor 212 begins executing model 1 by accessing the segment that stores active model 1. The memory manager 220 transitions the segment that stores low-power model 1 into the active state. When the machine learning processor 212 finishes executing active model 1, e.g., reaches the last instruction stored in the active segment, the machine learning processor 212 reads the pointer to the starting address of low-power model 1. The machine learning processor 212 jumps to the starting address of low-power model 1. Since the memory manager 220 has already transitioned the segment that stores low-power model 1 into the active state, the processor can immediately access the data stored in the segment that stores low-power model 1 and thus continue executing model 1 without waiting for the low-power segment to transition to the active state. In some examples, the segment that stores low-power model 1 may not have finished transitioning into the active state by the time the machine learning processor 212 finishes executing active model 1. The memory manager 220 can thus stall execution of model 1 until the segment that stores low-power model 1 has finished transitioning into the active state.

FIGS. 3A-3B are flowcharts of an example process 300 for reducing the power usage of storing a model in memory. The process 300 can be performed by any appropriate system, e.g., the system 100 of FIG. 1.

The system stores a first portion of a machine learning model in an active segment of memory of a device and a second portion of the model in a low-power segment of the memory of the device (310). In some implementations, a size of the first portion of the machine learning model depends on an execution rate of a machine learning processor of the device and a latency of transitioning the corresponding low-power segment of the memory to being an active segment of memory.

In some implementations, the memory is an SRAM device. In these implementations, the low-power segment of the SRAM device can be maintained in a deep sleep mode.

In some implementations, the device is a wearable device. For example, a wearable device requires low latency and low power usage.

The system maintains a mapping between a model identifier of the model and a starting address of the second portion of the model in the low-power segment of the memory (320). For example, the system can use a layout table such as Table 1 to maintain the mapping, described with reference to FIG. 1.

The system maintains a power state mapping between each segment of memory and a power state of each segment of memory (step 325). For example, the system can use a power state table such as Table 2 to maintain the power state mapping, described with reference to FIG. 1.

The system receives a request to execute the model (330). For example, the system can receive the request from a sensor 102 as described with reference to FIG. 1. In some implementations, the system can receive the request from a processor such as processor 110 of the device.

In response, the system initiates execution of the model using the first portion of the model stored in the active segment of memory (340). In some implementations, initiating execution of the model using the first portion of the model stored in the active segment of memory includes loading the first portion of the model from the active segment of memory into a machine learning processor of the device.

The system determines that the power state of the low-power segment of the memory is in a low-power state (345). The system can use the power state mapping to determine the power state of the low-power segment of the memory, for example.

In response, the system transitions the low-power segment of the memory to being another active segment of memory (350). For example, the system can transition the low-power segment of the memory by sending signals to the low-power segment of memory that include power state instructions to transition to the active state.

In some examples, the system determines that the low-power segment of the memory is in an active state (355). The system can use the power state mapping to determine the power state of the low-power segment of the memory, for example.

In response, upon reaching an end of the first portion of the machine learning model, the system can jump to the starting address of the second portion of the model (360) to continue execution of the second portion of the model. In some implementations, the system can store a pointer to the starting address of the second portion in the active segment of memory.

Referring to FIG. 3B, in examples where the system transitioned the low-power segment of the memory to being another active segment of memory, that is, the system performed step 350, the system can reach an end of the first portion of the machine learning model (365). For example, the system can execute the last instruction of the first portion of the model.

In some examples, the system can determine that the low-power segment of the memory has transitioned to being another active segment of memory (370). For example, as described above with reference to FIG. 1, the system can send a signal to the low-power segment of the memory that includes a query for the current power state of the low-power segment of the memory. The system can receive a response from the low-power segment of the memory that indicates the low-power segment of the memory is in an active state.

In response, the system can jump to the starting address of the second portion of the model to continue execution of the second portion of the model (375). In some implementations, the system can store a pointer to the starting address of the second portion in the active segment of memory.

In some examples, the low-power segment of the memory may not have finished transitioning into being an active segment of memory upon reaching the end of the first portion of the machine learning model. Thus the system can determine that the low-power segment of the memory has not transitioned to being another active segment of memory (380). For example, as described above with reference to FIG. 1, the system can send a signal to the low-power segment of the memory that includes a query for the current power state of the low-power segment of the memory. The system can receive a response from the low-power segment of the memory that indicates the low-power segment of the memory is in a low-power state.

In response, the system can stall execution of the model (385). For example, the system can pause execution of the model until the low-power segment of the memory has completed transitioning to being another active segment of memory.

The system can determine that the low-power segment of the memory has transitioned to being another active segment of memory (390). For example, after a period of time, the system can send a signal to the low-power segment of the memory that includes a query for the current power state of the low-power segment of the memory. The system can receive a response from the low-power segment of the memory that indicates the low-power segment of the memory is in an active state. The low-power segment has thus finished transitioning to being another segment of memory.

In some examples, the system can send a signal to the low-power segment of the memory that includes a query for the current power state of the low-power segment of the memory after each of multiple periods of times. The system can continue sending signals until receiving a response from the low-power segment of the memory that indicates the low-power segment of the memory is in an active state.

In response, the system can jump to the starting address of the second portion of the machine learning model to continue execution of the second portion of the machine learning model (395). For example, the system can load the second portion of the model into the machine learning processor to execute the second portion of the model.

In some implementations, after the system finishes execution of the second portion of the model, the system can transition the segment from an active segment back into a low-power segment.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program which may also be referred to or described as a program, software, a software application, an app, a module, a software module, a script, or code) can be written in any form of programming language, including compiled or interpreted languages, or declarative or procedural languages, and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

As used in this specification, an "engine," or "software engine," refers to a software implemented input/output system that provides an output that is different from the input. An engine can be an encoded block of functionality, such as a library, a platform, a software development kit ("SDK"), or an object. Each engine can be implemented on any appropriate type of computing device, e.g., servers, mobile phones, tablet computers, notebook computers, music players, e-book readers, laptop or desktop computers, PDAs, smart phones, or other stationary or portable devices, that includes one or more processors and computer readable media. Additionally, two or more of the engines may be implemented on the same computing device, or on different computing devices.

The processes and logic flows described in this specification can be performed by one or more programmable computers executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computers.

Computers suitable for the execution of a computer program can be based on general or special purpose microprocessors or both, or any other kind of central processing unit. Generally, a central processing unit will receive instructions and data from a read-only memory or a random access memory or both. The essential elements of a computer are a central processing unit for performing or executing instructions and one or more memory devices for storing instructions and data. The central processing unit and the memory can be supplemented by, or incorporated in, special purpose logic circuitry. Generally, a computer will also include, or be operatively coupled to receive data from or transfer data to, or both, one or more mass storage devices for storing data, e.g., magnetic, magneto-optical disks, or optical disks. However, a computer need not have such devices. Moreover, a computer can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

To provide for interaction with a user, embodiments of the subject matter described in this specification can be implemented on a computer having a display device, e.g., a CRT (cathode ray tube) or LCD (liquid crystal display) monitor, for displaying information to the user and a keyboard and pointing device, e.g, a mouse, trackball, or a presence sensitive display or other surface by which the user can provide input to the computer. Other kinds of devices can be used to provide for interaction with a user as well; for example, feedback provided to the user can be any form of sensory feedback, e.g., visual feedback, auditory feedback, or tactile feedback; and input from the user can be received in any form, including acoustic, speech, or tactile input. In addition, a computer can interact with a user by sending documents to and receiving documents from a device that is used by the user; for example, by sending web pages to a web browser on a user's device in response to requests received from the web browser. Also, a computer can interact with a user by sending text messages or other forms of message to a personal device, e.g., a smartphone, running a messaging application, and receiving responsive messages from the user in return.

Embodiments of the subject matter described in this specification can be implemented in a computing system that includes a back-end component, e.g., as a data server, or that includes a middleware component, e.g., an application server, or that includes a front-end component, e.g., a client computer having a graphical user interface, a web browser, or an app through which a user can interact with an implementation of the subject matter described in this specification, or any combination of one or more such back-end, middleware, or front-end components. The components of the system can be interconnected by any form or medium of digital data communication, e.g., a communication network. Examples of communication networks include a local area network (LAN) and a wide area network (WAN), e.g., the Internet.

The computing system can include clients and servers. A client and server are generally remote from each other and typically interact through a communication network. The relationship of client and server arises by virtue of computer programs running on the respective computers and having a client-server relationship to each other. In some embodiments, a server transmits data, e.g., an HTML page, to a user device, e.g., for purposes of displaying data to and receiving user input from a user interacting with the device, which acts as a client. Data generated at the user device, e.g., a result of the user interaction, can be received at the server from the device.

While this specification contains many specific implementation details, these should not be construed as limitations on the scope the claims, but rather as descriptions of features that may be specific to particular embodiments of particular inventions.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims.

## Claims

1. A method comprising:
storing (310) a first portion of a machine learning model in an active segment of memory of a device and a second portion of the machine learning model in a low-power segment of the memory of the device, wherein a size of the first portion of the machine learning model depends on an execution rate of a machine learning processor of the device and a latency of transitioning the corresponding low-power segment of the memory to being an active segment of memory;
maintaining (320) a mapping between a model identifier of the machine learning model and a starting address of the second portion of the machine learning model in the low-power segment of the memory;
maintaining (325) a power state mapping between each segment of memory and a power state of each segment of memory;
receiving (330) a request to execute the machine learning model;
in response, initiating (340) execution of the machine learning model using the first portion of the machine learning model stored in the active segment of memory;
determining (345) that the low-power segment of the memory is in a low-power state; and
in response, transitioning (350) the low-power segment of the memory to being another active segment of memory.

2. The method of claim 1, further comprising:
determining (355) that the low-power segment of the memory is in an active state; and
in response, upon reaching an end of the first portion of the machine learning model, jumping (360) to the starting address of the second portion of the machine learning model to continue execution of the second portion of the machine learning model.

3. The method of claim 1, further comprising:
reaching (365) an end of the first portion of the machine learning model;
determining (370) that the low-power segment of the memory has transitioned to being another active segment of memory; and
in response, jumping (375) to the starting address of the second portion of the machine learning model to continue execution of the second portion of the machine learning model.

4. The method of claim 1, further comprising:
reaching (365) an end of the first portion of the machine learning model;
determining (380) that the low-power segment of the memory has not transitioned to being another active segment of memory; and
in response, stalling (385) execution of the machine learning model.

5. The method of claim 4, further comprising:
Determining (390) that the low-power segment of the memory has transitioned to being another active segment of memory; and
in response, jumping (395) to the starting address of the second portion of the machine learning model to continue execution of the second portion of the machine learning model.

6. The method of claim 1, further comprising storing a pointer to the starting address of the second portion in the active segment of memory.

7. The method of claim 1, wherein initiating execution of the machine learning model using the first portion of the machine learning model stored in the active segment of memory comprises loading the first portion of the machine learning model from the active segment of memory into a machine learning processor of the device.

8. The method of claim 7, further comprising: after transitioning the low-power segment to being another active segment, loading the second portion of the machine learning model into the machine learning processor.

9. The method of claim 1, wherein the device is a wearable device.

10. The method of claim 1, wherein the memory is an SRAM device.

11. The method of claim 10, wherein the low-power segment of the SRAM device is maintained in a deep sleep mode.

12. A system (100) comprising:
a memory subsystem (128); and
a memory manager (120) implemented by data processing apparatus configured to perform operations comprising the method of any preceding claim.

## Patentansprüche

1. Verfahren, umfassend:
Speichern (310) eines ersten Abschnitts eines maschinellen Lernmodells in einem aktiven Segment eines Speichers einer Vorrichtung und eines zweiten Abschnitts des maschinellen Lernmodells in einem Niedrigstromsegment des Speichers der Vorrichtung, wobei eine Größe des ersten Abschnitts des maschinellen Lernmodells von einer Ausführungsrate eines maschinellen Lernprozessors der Vorrichtung und einer Latenzzeit des Umwandelns des entsprechenden Niedrigstromsegment des Speichers in ein aktives Speichersegment abhängt;
Aufrechterhalten (320) einer Zuordnung zwischen einer Modellkennung des maschinellen Lernmodells und einer Startadresse des zweiten Abschnitts des maschinellen Lernmodells in dem Niedrigstromsegment des Speichers;
Aufrechterhalten (325) einer Stromzustandszuordnung zwischen jedem Speichersegment und einem Stromzustand jedes Speichersegments;
Empfangen (330) einer Anforderung zum Ausführen des maschinellen Lernmodells;
als Reaktion darauf Initiieren (340) der Ausführung des maschinellen Lernmodells unter Verwendung des ersten Abschnitts des maschinellen Lernmodells, der im aktiven Segment des Speichers gespeichert ist;
Bestimmen (345), dass sich das Niedrigstromsegment des Speichers in einem Niedrigstromzustand befindet; und
als Reaktion darauf Umwandeln (350) des Niedrigstromsegments des Speichers in ein anderes aktives Speichersegment.

2. Verfahren nach Anspruch 1, ferner umfassend:
Bestimmen (355), dass sich das Niedrigstromsegment des Speichers in einem aktiven Zustand befindet; und
als Reaktion auf das Erreichen eines Endes des ersten Abschnitts des maschinellen Lernmodells Springen (360) zu der Startadresse des zweiten Abschnitts des maschinellen Lernmodells, um die Ausführung des zweiten Abschnitts des maschinellen Lernmodells fortzusetzen.

3. Verfahren nach Anspruch 1, ferner umfassend:
Erreichen (365) eines Endes des ersten Abschnitts des maschinellen Lernmodells;
Bestimmen (370), dass das Niedrigstromsegment des Speichers in ein anderes aktives Speichersegment umgewandelt wurde; und
als Reaktion darauf Springen (375) zu der Startadresse des zweiten Abschnitts des maschinellen Lernmodells, um die Ausführung des zweiten Abschnitts des maschinellen Lernmodells fortzusetzen.

4. Verfahren nach Anspruch 1, ferner umfassend:
Erreichen (365) eines Endes des ersten Abschnitts des maschinellen Lernmodells;
Bestimmen (380), dass das Niedrigstromsegment des Speichers nicht in ein anderes aktives Speichersegment umgewandelt wurde; und
als Reaktion darauf Verzögern (385) der Ausführung des maschinellen Lernmodells.

5. Verfahren nach Anspruch 4, ferner umfassend:
Bestimmen (390), dass das Niedrigstromsegment des Speichers in ein anderes aktives Speichersegment umgewandelt wurde; und
als Reaktion darauf Springen (395) zu der Startadresse des zweiten Abschnitts des maschinellen Lernmodells, um die Ausführung des zweiten Abschnitts des maschinellen Lernmodells fortzusetzen.

6. Verfahren nach Anspruch 1, ferner umfassend Speichern eines Zeigers auf die Anfangsadresse des zweiten Abschnitts in dem aktiven Speichersegment.

7. Verfahren nach Anspruch 1, wobei das Initiieren der Ausführung des maschinellen Lernmodells unter Verwendung des ersten Abschnitts des maschinellen Lernmodells, der in dem aktiven Segment des Speichers gespeichert ist, Laden des ersten Abschnitts des maschinellen Lernmodells aus dem aktiven Segment des Speichers in einen maschinellen Lernprozessor der Vorrichtung umfasst.

8. Verfahren nach Anspruch 7, ferner umfassend: nach dem Umwandeln des Niedrigstromsegments in ein anderes aktives Segment Laden des zweiten Abschnitts des maschinellen Lernmodells in den maschinellen Lernprozessor.

9. Verfahren nach Anspruch 1, wobei die Vorrichtung eine tragbare Vorrichtung ist.

10. Verfahren nach Anspruch 1, wobei der Speicher eine SRAM-Vorrichtung ist.

11. Verfahren nach Anspruch 10, wobei das Niedrigstromsegment der SRAM-Vorrichtung in einem Tiefschlafmodus gehalten wird.

12. System (100), umfassend:
ein Speicher-Teilsystem (128) und
einen Speichermanager (120), der durch eine Datenverarbeitungseinrichtung implementiert wird, die dazu konfiguriert ist, Operationen durchzuführen, die das Verfahren nach einem der vorhergehenden Ansprüche umfassen.

## Revendications

1. Procédé comprenant :
le stockage (310) d'une première partie d'un modèle d'apprentissage automatique dans un segment actif de mémoire d'un dispositif et d'une seconde partie du modèle d'apprentissage automatique dans un segment à faible énergie de la mémoire du dispositif, dans lequel une taille de la première partie du modèle d'apprentissage automatique dépend d'un taux d'exécution d'un processeur d'apprentissage automatique du dispositif et d'une latence de transition du segment à faible énergie correspondant de la mémoire en un segment actif de mémoire ;
le maintien (320) d'un mappage entre un identifiant de modèle du modèle d'apprentissage automatique et une adresse de départ de la seconde partie du modèle d'apprentissage automatique dans le segment à faible énergie de la mémoire ;
le maintien (325) d'un mappage d'état d'énergie entre chaque segment de mémoire et un état d'énergie de chaque segment de mémoire ;
la réception (330) d'une demande d'exécution du modèle d'apprentissage automatique ;
en réponse, l'initiation (340) de l'exécution du modèle d'apprentissage automatique à l'aide de la première partie du modèle d'apprentissage automatique stockée dans le segment actif de mémoire ;
la détermination (345) que le segment à faible énergie de la mémoire est dans un état de faible énergie ; et
en réponse, la transition (350) du segment à faible énergie de la mémoire à un autre segment actif de mémoire.

2. Procédé selon la revendication 1, comprenant également :
la détermination (355) que le segment à faible énergie de la mémoire est dans un état actif ; et
en réponse, à l'atteinte d'une fin de la première partie du modèle d'apprentissage automatique, le saut (360) à l'adresse de départ de la seconde partie du modèle d'apprentissage automatique pour continuer l'exécution de la seconde partie du modèle d'apprentissage automatique.

3. Procédé selon la revendication 1, comprenant également :
l'atteinte (365) d'une fin de la première partie du modèle d'apprentissage automatique ;
la détermination (370) que le segment à faible énergie de la mémoire est devenu un autre segment actif de la mémoire ; et
en réponse, le saut (375) à l'adresse de départ de la seconde partie du modèle d'apprentissage automatique pour continuer l'exécution de la seconde partie du modèle d'apprentissage automatique.

4. Procédé selon la revendication 1, comprenant également :
l'atteinte (365) d'une fin de la première partie du modèle d'apprentissage automatique ;
la détermination (380) que le segment à faible énergie de la mémoire n'est pas devenu un autre segment actif de mémoire ; et
en réponse, le blocage (385) de l'exécution du modèle d'apprentissage automatique.

5. Procédé selon la revendication 4, comprenant également :
la détermination (390) que le segment à faible énergie de la mémoire est devenu un autre segment actif de mémoire ; et
en réponse, le saut (395) à l'adresse de départ de la seconde partie du modèle d'apprentissage automatique pour continuer l'exécution de la seconde partie du modèle d'apprentissage automatique.

6. Procédé selon la revendication 1, comprenant également le stockage d'un pointeur vers l'adresse de départ de la seconde partie dans le segment actif de mémoire.

7. Procédé selon la revendication 1, dans lequel l'initiation de l'exécution du modèle d'apprentissage automatique à l'aide de la première partie du modèle d'apprentissage automatique stocké dans le segment actif de mémoire comprend le chargement de la première partie du modèle d'apprentissage automatique à partir du segment actif de mémoire dans un processeur d'apprentissage automatique du dispositif.

8. Procédé selon la revendication 7, comprenant également : après la transition du segment à faible énergie en un autre segment actif, le chargement de la seconde partie du modèle d'apprentissage automatique dans le processeur d'apprentissage automatique.

9. Procédé selon la revendication 1, dans lequel le dispositif est un dispositif portable.

10. Procédé selon la revendication 1, dans lequel la mémoire est un dispositif SRAM.

11. Procédé selon la revendication 10, dans lequel le segment à faible énergie du dispositif SRAM est maintenu dans un mode veille profonde.

12. Système (100) comprenant :
un sous-système de mémoire (128) ; et
un gestionnaire de mémoire (120) mis en œuvre par un appareil de traitement de données configuré pour réaliser des opérations comprenant le procédé selon une quelconque revendication précédente.
